# EUROPEAN PATENT APPLICATION

(11) **EP 3 835 907 A1**
(43) Date of publication of application: **16.06.2021**
(21) Application number: 19847334.0
(22) Date of filing: 08.08.2019
(51) Int. Cl.: G05D 1/02

(54) **SELF-MOBILE DEVICE, AUTOMATIC OPERATING SYSTEM AND CONTROL METHOD THEREOF**

(30) Priority: 08.08.2018 CN 201810897515; 08.08.2018 CN 201821275478 U
(71) Applicant: Positec Power Tools (Suzhou) Co., Ltd, Suzhou, Jiangsu 215123 (CN)
(72) Inventor: LAN, Bincai, Suzhou, Jiangsu 215123 (CN); ZHANG, Xiaojun, Suzhou, Jiangsu 215123 (CN); WU, Wenling, Suzhou, Jiangsu 215123 (CN); PENG, Xiaonan, Suzhou, Jiangsu 215123 (CN)
(74) Representative: Dentons UK and Middle East LLP
(86) International application number: PCT/CN2019/099865
(87) International publication number: WO 2020/030066

(57) **Abstract**

The present invention provides a self-moving device, an automatic working system, and a control method therefor. The automatic working system includes: a self-moving device, configured to move and execute a work task within a working area defined by a boundary; and a magnetic device, disposed within the working area or at a position near the boundary of the working area, where the self-moving device includes a boundary recognition module, a magnetic signal detection module, and a control module; the boundary recognition module is configured to recognize the boundary of the working area; the magnetic signal detection module is configured to detect a magnetic signal generated by the magnetic device to further recognize the boundary of the working area and/or guide the self-moving device; and the control module is configured to control a movement pattern of the self-moving device based on a recognition result of the boundary recognition module and/or a detection result of the magnetic signal detection module. A boundary defining manner of the automatic working system is simple, a boundary detection result is accurate, the working efficiency is high, and the safety of the system is improved.

## Description

### BACKGROUND

### Technical Field

The present invention relates to an automatic working system, and in particular, to a system for controlling a self-moving device to execute a work task within a working area.

The present invention relates to a control method for an automatic working system, and in particular, to a control method for controlling a self-moving device to execute a work task within a working area.

The present invention relates to a self-moving device, and in particular, to a self-moving device for automatically executing a work task within a working area.

### Related Art

With the development of charging technologies, autonomous charging technologies have also been increasingly widely used. An example in which an autonomous traveling device, such as a robotic lawn mower, is used. The autonomous traveling device generally works, for example, weeds or cleans, in a specified working area. When having a low electricity quantity, the autonomous traveling device moves to a charging station, and docks with the charging station to complete charging.

In the prior art, generally, a boundary line is disposed within the working area of the autonomous traveling device, and the boundary line is connected to the charging station, so that the autonomous traveling device can accurately dock with a charging electrode plate of the charging station to complete the charging. However, a method that the boundary line guides the autonomous traveling device to perform charging and docking requires that the boundary line is always in an on state, resulting in relatively large power consumption, which does not conform to the concepts of energy saving and environmental protection.

In the prior art, the self-moving device generally works in a limited working area. For example, a working area of a sweeping robot is generally limited by a wall or the like. For example, for the self-moving device such as a robotic lawn mower, a boundary line is generally laid around the working area, and the robotic lawn mower detects a boundary of the working area by detecting a signal of the boundary line, to control the robotic lawn mower to travel and work within the working area. However, such installation of burying the boundary line around the working area is not only troublesome, but also time-consuming and labor-consuming. Moreover, it takes hours or even days to work according to the size and complexity of the land, and damage may be further caused to a surface, such as a lawn and soil, of the working area. In addition, damage of a specific boundary line is not easily checked, and maintenance is more cumbersome.

### SUMMARY

Based on this, for the foregoing problems, it is necessary to provide a self-moving device, an automatic working system, and a control method therefor, where a boundary line does not need to be laid, a defining manner of a working area is simple, positioning is accurate, the working efficiency is high, and the work is safe.

The present invention provides an automatic working system, including:
a self-moving device, configured to move and execute a work task within a working area defined by a boundary; and a magnetic device, disposed within the working area or at a position near the boundary of the working area, where the self-moving device includes a boundary recognition module, a magnetic signal detection module, and a control module.

The boundary recognition module is configured to recognize the boundary of the working area.

The magnetic signal detection module is configured to detect a magnetic signal generated by the magnetic device to further recognize the boundary of the working area and/or guide the self-moving device.

The control module is configured to control a movement pattern of the self-moving device based on a recognition result of the boundary recognition module and/or a detection result of the magnetic signal detection module.

In a specific embodiment, the magnetic device includes a strip-shaped magnetic device.

In a specific embodiment, the boundary recognition module includes a position detection module, and the position detection module recognizes the boundary of the working area based on a comparison between a detected current position of the self-moving device and a preset map.

In a specific embodiment, the position detection module includes a satellite signal obtaining unit, where the satellite signal obtaining unit detects the current position of the self-moving device based on an obtained satellite signal.

In a specific embodiment, the magnetic device is disposed at a position near a boundary at which a signal of the position detection module is unreliable, the magnetic signal detection module detects the magnetic signal to recognize the boundary of the working area, and the control module controls, based on the detection result of the magnetic signal detection module, the self-moving device to move away from the boundary or along the boundary.

In a specific embodiment, a disposition position of the magnetic device is generated based on the preset map.

In a specific embodiment, the preset map is generated by the position detection module or is obtained by the self-moving device from the outside.

In a specific embodiment, the boundary recognition module includes a surface feature recognition module, where the surface feature recognition module recognizes the boundary of the working area based on a difference between a surface feature of the working area and a surface feature of a non-working area.

In a specific embodiment, the surface feature recognition module includes one or more of an image obtaining module, a capacitance detection module, a millimeter wave radar detection module, a multispectral detection module, and an infrared laser image detection module.

In a specific embodiment, the magnetic device is disposed at a position near a boundary at which the surface feature of the working area and/or the surface feature of the non-working area are/is unreliable, the magnetic signal detection module detects the magnetic signal to recognize the boundary of the working area, and the control module controls, based on the detection result of the magnetic signal detection module, the self-moving device to move away from the boundary or along the boundary.

In a specific embodiment, the automatic working system further includes a docking station for the self-moving device to dock, the magnetic device is disposed at the docking station, and is disposed along a direction in which the self-moving device docks with the docking station, and the control module controls, based on the magnetic signal detected by the magnetic signal detection module, the self-moving device to move along the magnetic device, to guide the self-moving device to move to the docking station.

In a specific embodiment, the magnetic device is disposed at an extended position of the docking station, and the control module controls the self-moving device to move along the magnetic device to guide the self-moving device to return to the docking station.

In a specific embodiment, the magnetic device is disposed at the docking station, and the control module controls the self-moving device to move along the magnetic device to guide the self-moving device to dock with the docking station. In a specific embodiment, the docking station further includes a base, and the magnetic device is disposed on a central axis of the base.

In a specific embodiment, the working area includes a first working area and a second working area separated by at least one space, the magnetic device is disposed within the space, and configured to indicate a direction in which the space is passable for entering the second working area from the first working area, and the control module controls, based on the magnetic signal detected by the magnetic signal detection module, the self-moving device to move along the magnetic device, to guide the self-moving device to pass through the space for entering the second working area from the first working area. In a specific embodiment, the self-moving device moves along a boundary of the first working area to detect the magnetic device. In a specific embodiment, the magnetic device is disposed around an excluded area within the working area, and the control module controls the movement pattern of the self-moving device based on the magnetic signal detected by a magnetic detection device, to move away from the excluded area or around the excluded area, where the excluded area includes an area in which the self-moving device is prohibited from executing the work task within the working area. In a specific embodiment, the magnetic signal detection module includes a geomagnetic detection module.

In a specific embodiment, the magnetic signal detection module includes a first geomagnetic detection module and a second geomagnetic detection module, and the first geomagnetic detection module and the second geomagnetic detection module are mounted on two sides of a forward direction of the self-moving device respectively.

In a specific embodiment, the control module controls the movement pattern of the self-moving device based on the strength and/or a direction of the magnetic signal detected by the geomagnetic detection module.

In a specific embodiment, the control module determines reliability of the boundary recognition module, when the reliability falls within a preset range, the control module controls the movement pattern of the self-moving device based on the recognition result of the boundary recognition module, and when the reliability exceeds the preset range, the control module controls the movement pattern of the self-moving device based on the detection result of the magnetic signal detection module.

In the automatic working system provided in the present invention, a magnetic device is disposed within a working area or at a position near a boundary of the working area, the self-moving device detects the magnetic device by using the magnetic signal detection module, which assists in recognizing the boundary of the working area based on the magnetic signal of the magnetic device and guides the self-moving device. The control module controls a movement pattern of the self-moving device based on detection results of the boundary recognition module and the magnetic signal detection module. A boundary detection result of the automatic working system is accurate, the working efficiency is high, and the safety of the automatic working system is improved. In addition, the magnetic device may automatically generate a magnetic field signal without being connected to a power supply, and is less affected by an environmental factor, so that waste of energy can be effectively suppressed, and maintenance costs can be reduced.

Correspondingly, the embodiments of the present invention further provide a working method of an automatic working system. The automatic working system includes: a self-moving device, configured to move and execute a work task within a working area defined by a boundary, and a magnetic device, disposed within the working area or at a position near the boundary of the working area, where the self-moving device includes a boundary recognition module, a magnetic signal detection module, and a control module; and the method includes:
recognizing the boundary of the working area;
detecting the magnetic device to further recognize the boundary of the working area and/or guide the self-moving device; and
controlling a movement pattern of the self-moving device based on a recognition result of the boundary recognition module and/or a detection result of the magnetic signal detection module.

In the control method for an automatic working system provided in the present invention, the self-moving device detects, in real time, the magnetic signal generated by the magnetic device disposed in the working area, to accurately recognize the boundary of the working area and precisely guide the movement of the self-moving device, and finally, to control the movement pattern of the self-moving device by combining the detection results of the boundary recognition module and the magnetic signal detection module, thereby improving the working efficiency of the self-moving device and reducing a risk of the work.

In addition, the embodiments of the present invention further provide a self-moving device. The self-moving device includes a boundary recognition module, a magnetic signal detection module, and a control module. The boundary recognition module is configured to recognize the boundary of the working area, and the control module is configured to control the self-moving device to move and execute a work task within a working area limited by a boundary. The magnetic signal detection module is configured to detect a magnetic signal to further recognize the boundary of the working area and/or guide the self-moving device. The control module is configured to control a movement pattern of the self-moving device based on a recognition result of the boundary recognition module and/or a detection result of the magnetic signal detection module.

In a specific embodiment, the magnetic signal is generated by a magnetic device disposed within the working area or at a position near the boundary of the working area.

In the self-moving device provided in the present invention, a magnetic device disposed in the working area is detected by using the magnetic signal detection module, which assists in recognizing the boundary of the working area based on the detected magnetic signal and guides the self-moving device. The control module controls a movement pattern of the self-moving device based on detection results of the boundary recognition module and the magnetic signal detection module, so that a boundary detection result of the self-moving device is accurate, working efficiency thereof is improved, and working safety of the self-moving device is improved. In addition, the self-moving device detects, by using a geomagnetic detection module, the magnetic device disposed in the working area. The geomagnetic detection module has high detection sensitivity and an accurate detection result.

### BRIEF DESCRIPTION OF THE DRAWINGS

FIG. 1 is a schematic diagram of an automatic working system according to an embodiment of the present invention.
FIG. 2 is a schematic diagram of module composition of a self-moving device according to an embodiment of the invention.
FIG. 3 is a schematic diagram of an automatic working system according to a first embodiment of the present invention.
FIG. 4 is a schematic diagram of disposing a magnetic device in the automatic working system at a boundary position according to the first embodiment of the present invention.
FIG. 5 is a schematic diagram of disposing a magnetic device in an automatic working system at a boundary position according to a second embodiment of the present invention.
FIG. 6 is a schematic diagram of disposing a magnetic device in an automatic working system at an extended position of a docking station according to an embodiment of the present invention.
FIG. 7 is a schematic diagram of disposing a magnetic device in an automatic working system at a docking station according to another embodiment of the present invention.
FIG. 8 is a schematic diagram of the self-moving device in FIG. 7 returning to the docking station.
FIG. 9 is a schematic diagram of disposing a magnetic device in an automatic working system in a space connecting a first working area and a second working area according to an embodiment of the present invention.
FIG. 10 is a schematic diagram of disposing a magnetic device in an automatic working system in an excluded area according to an embodiment of the present invention.

### DETAILED DESCRIPTION

To make the foregoing objects, features and advantages of the present invention more comprehensible, detailed description is made to specific implementations of the present invention below with reference to the accompanying drawings. In the following description, many specific details are described to give a full understanding of the present invention. However, the present invention may be implemented in many other manners different from those described herein. A person skilled in the art may make similar improvements without departing from the connotation of the present invention. Therefore, the present invention is not limited to the specific embodiments disclosed below.

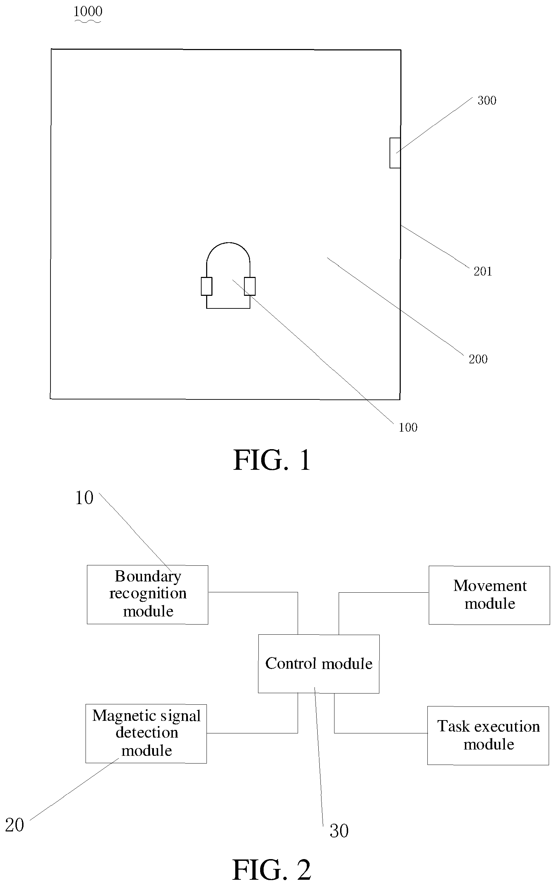

As shown in FIG. 1, an embodiment of the present invention provides an automatic working system 1000. The automatic working system 1000 includes a self-moving device 100 that moves and executes a work task within a working area 200 dfined by a boundary. A form of the boundary does not include a form of a boundary line through which an electric signal flows to form a varying magnetic field, and in particular, does not include a form of a boundary line through which an electric signal flows to form an electric circuit. The boundary in this embodiment may be in a form of a virtual boundary. The self-moving device can effectively recognize the virtual boundary to define a working area of the self-moving device. A magnetic device 300 may be further disposed within the working area or at a position near the boundary of the working area. The magnetic device is a strip-shaped permanent magnet, and may cause a magnetic field change of a surrounding environment without external energy, to generate a magnetic field signal. Specifically, the strip-shaped permanent magnet includes a strip-shaped magnetic device, for example, a strip-shaped magnetic device formed by magnetic strips or magnetic objects through arrangement. As shown in FIG. 2, the self-moving device 100 includes: a housing, a work task execution module disposed on the housing, and a movement module, configured to support the housing to drive the self-moving device to move. The self-moving device 100 further includes a boundary recognition module 10, a magnetic signal detection module 20, and a control module 30. The control module 30 is electrically connected to the boundary recognition module 10, the magnetic signal detection module 20, the movement module, and the work task execution module, and is configured to control operation of the modules. Specifically, the boundary recognition module 10 is configured to recognize a boundary 201 of the working area 200. The boundary 201 is used for limiting a range of the working area 200. The control module 30 is configured to control the self-moving device 100 to execute the work task within the limited working area 200. The magnetic signal detection module 20 is configured to detect a magnetic signal in a surrounding environment, to further recognize the boundary 201 of the working area based on the magnetic signal of the magnetic device 300 and further guide the self-moving device 100 based on the detected magnetic signal. The boundary recognition module 10 and the magnetic signal detection module 20 send detection results to the control module 30. The control module 30 controls operation of the movement module based on a recognition result of the boundary recognition module 10 and/or the detection result of the magnetic signal detection module 20, to control a movement pattern of the self-moving device 100. The movement pattern includes controlling the self-moving device to reverse or turn to move away from the boundary, or controlling the self-moving device to bypass the boundary, for example, executing a cutting mode along the boundary, or controlling the movement of the self-moving device to guide the self-moving device. The operation of the task execution module may be further controlled according to the detection result as required. In a specific embodiment, the magnetic signal detection module is a geomagnetic detection module, is not limited in terms of quantity, and detects the magnetic signal of the magnetic device by using the geomagnetic detection module, so that the detection is more sensitive. In this embodiment of the present invention, the disposing the magnetic device at a position near the boundary may include directly disposing the magnetic device at the boundary, or may include disposing the magnetic device at a position close to a boundary of a first working area in a channel when the self-moving device passes through the channel from the first working area to a second working area. Certainly, the magnetic device may alternatively be disposed at the position near the boundary of the working area such as a door of a user's home.

The self-moving device provided in this embodiment of the present invention is configured to intelligently perform an operation task, thereby freeing the user from time-consuming and labor-consuming cumbersome work. The self-moving device may be an autonomous or semi-autonomous machine such as a robotic lawn mower, a robotic grass trimmer, a robotic pruner, or a robotic snow sweeper. In the following embodiments, an example in which the self-moving device is a robotic lawn mower is used.

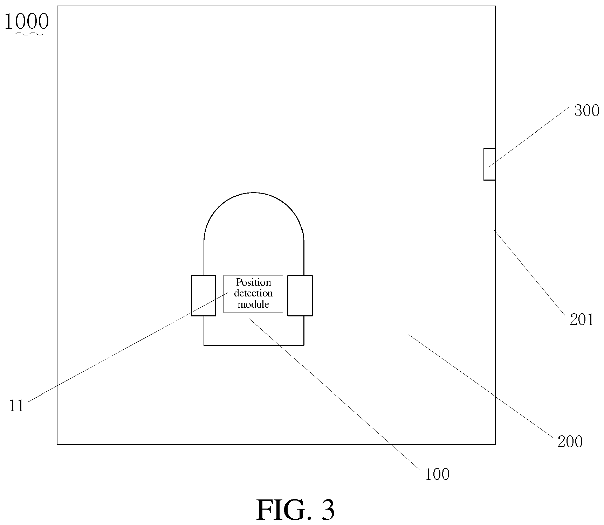

In a first embodiment of the present invention, the boundary recognition module includes a position detection module, and recognizes a boundary of a working area by using the position detection module. As shown in FIG. 3, an example in which the self-moving device is a robotic lawn mower 100, and the working area is a lawn 200 is used. The robotic lawn mower 100 detects a current position of the robotic lawn mower 100 by using the position detection module 11, while performing a cutting task within the lawn 200, to recognize the boundary 201 of the lawn based on a comparison between the current position and a preset map. When detecting that the current position is the boundary 201 of the lawn, the control module 30 controls the robotic lawn mower 100 to turn or reverse, and so on, so that the robotic lawn mower 100 does not cross this boundary, and can always travel and work within the lawn 200. The position detection module 11 includes a satellite signal obtaining unit. The satellite signal obtaining unit is, for example, a GPS positioning module. The position detection module obtains a satellite signal by using the GPS module, and calculates a current position of the robotic lawn mower 100 based on the satellite signal.

The preset map in the foregoing embodiments may be a boundary map formed by the user operating in advance the self-moving device 100 with the position detection module 11, to travel at the boundary 201, and may be a boundary map generated in a manner in which the user personally guides the self-moving device 100 to travel at the boundary, or the user remotely controls the self-moving device 100 to travel at the boundary, or the user operates in advance the position detection module 11 detached from the self-moving device 100 to detect the boundary 201. Certainly, the preset map may alternatively be a boundary map generated by detecting, by the user, the boundary 201 in advance by using another positioning module with a position detection function, and the boundary map is then transmitted to the self-moving device 100. Alternatively, the preset map may be a boundary map obtained by the self-moving device 100 in advance from the cloud. Certainly, feasibly, the self-moving device may alternatively compare the current position with the boundary map stored in the cloud instead of obtaining the map, to determine a position relationship between the current position of the self-moving device 100 and the boundary map, thereby controlling the movement of the self-moving device in the working area 200 limited by the boundary. In summary, the form of obtaining the preset map is not limited.

In another embodiment, the foregoing position detection module may alternatively obtain the current position of the self-moving device by communicating with a plurality of positioning beacons disposed at the boundary positions of the working area. For example, a plurality of positioning beacons are disposed at the boundary positions of the working area, and a positioning element is disposed on the self-moving device. The positioning element can communicate with the positioning beacons. The self-moving device obtains distances from the self-moving device to the positioning beacons while the positioning element follows the self-moving device to move, and finally obtains a set of boundary positions of the working area, that is, the boundary map of the working area. The self-moving device obtains the current position of the self-moving device in a process of executing the task, determines the position relationship between the current position and the boundary map, and finally controls the self-moving device to enable the self-moving device to travel and work always within the working area. In this embodiment, the positioning beacon and the positioning element perform position calculation by using an ultra-wideband (UWB) tag positioning technology. That is, the positioning element is an ultra-wideband positioning element, or referred to as an ultra-wideband positioning tag. The positioning beacon is an ultra-wideband tag positioning module. In another embodiment, the positioning beacon and the positioning element perform position calculation by using an ultrasonic positioning technology. Certainly, other positioning manners are also feasible, for example, manners such as an infrared positioning technology, a Wi-Fi positioning technology, a Bluetooth positioning technology, and a ZigBee positioning technology.

In a second embodiment of the present invention, the boundary recognition module includes a surface feature recognition module, where the surface feature recognition module recognizes the boundary of the working area based on a difference between a surface feature of the working area and a surface feature of a non-working area. For example, using a lawn inside the working area and a road outside the working area as an example, surface features of the lawn and the road are different, and the surface feature recognition module of the self-moving device can distinguish a difference between the surface features, to recognize a boundary between the lawn and the road. The surface feature recognition module may be one or more of an image obtaining module, a capacitance detection module, a millimeter wave radar detection module, a multispectral detection module, and an infrared laser image detection module. A person skilled in the art may understand that, an image obtaining module recognizes the boundary by recognizing a color and/or a texture feature or the like of a grassland. A capacitance detection module recognizes the boundary by recognizing a moisture feature of a grassland. A millimeter wave radar detection module recognizes the boundary by recognizing an echo feature of a grassland surface. The multispectral detection module recognizes the boundary by recognizing a content of chlorophyll of a grassland. The infrared laser image recognizes the boundary by recognizing dispersion of pixels in a grassland image. A type is not limited provided that the surface feature recognition module in this embodiment of the present invention can effectively recognize grassland and non-grassland area features to recognize the boundary.

When the boundary of the working area is recognized by using the boundary recognition module in the foregoing embodiments, the magnetic device may be disposed at the boundary position, to assist in defining the boundary of the working area. Specifically, the magnetic device is disposed at a boundary position where a signal is unreliable. The boundary position where a signal is unreliable includes a boundary position where a satellite signal is unreliable, or a position where a surface feature of the working area and/or a surface feature of the non-working area are/is unreliable. The magnetic device is disposed at the boundary position, to resolve the problem that recognizing the boundary by only using the boundary recognition module causes misjudgment on the boundary recognition because a signal recognized by the boundary recognition module is unreliable. The following specifically describes the embodiments.

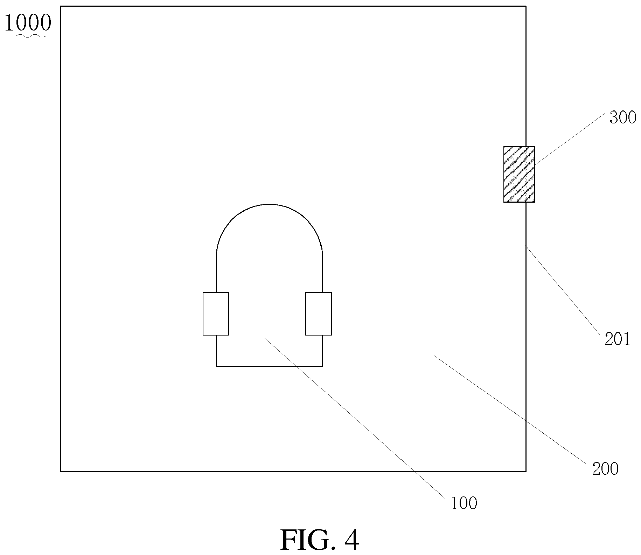

As shown in FIG. 4, for example, trees or bushes are disposed at a position or several positions within a lawn 200 of a user. A satellite signal obtaining unit receives a satellite signal with relatively poor quality at the position or cannot receive a satellite signal at all at the position. The position at which the satellite signal obtaining unit cannot receive a reliable satellite signal may be referred to as a shaded area. When traveling to the shaded area, the robotic lawn mower 100 cannot detect a current position thereof accurately. When the shaded area is located at the boundary 201, the position detection module 11 is likely to make misjudgment. For example, the robotic lawn mower 200 considers that the position is located inside the boundary 201 based on a determining result of the position detection module 11. However, in this case, if the robotic lawn mower 100 continues traveling, the robotic lawn mower 100 may travels outside the boundary 201. That the robotic lawn mower travels outside the working area a plurality of times affects the cutting efficiency of the robotic lawn mower, and may cause potential safety hazards. In this case, to accurately detect the boundary 201, the magnetic device 300 is disposed in the shaded area of the boundary 201. The shaded area is represented by oblique-line filling in FIG. 4. The magnetic device may cause a magnetic field change, to generate a magnetic signal. When working within the lawn 200, the robotic lawn mower 100, in addition to detecting a current position thereof by using the position detection module 11 and obtaining a position relationship between the current position and the boundary 201 through comparison, further detects in real time a magnetic signal generated by the magnetic device 30 by using the magnetic signal detection module 20. The control module 300 determines the current position of the robotic lawn mower 100 by combining the detection results of the position detection module 11 and the magnetic signal detection module 20. For example, when the robotic lawn mower 200 travels to the shaded area, a satellite signal received by the control module 30 by using the satellite signal obtaining unit is unreliable and cannot accurately reflect a relationship between the current position of the robotic lawn mower 200 and the boundary position. In this case, the control module controls the magnetic signal detection module 20 to detect the magnetic signal generated by the magnetic device 30. When the robotic lawn mower 200 travels to an effective detection range of the magnetic device 30, a distance and a direction from the current position of the robotic lawn mower 100 to the position of the boundary 201 may be calculated based on the strength and/or a direction of the detected magnetic signal, to determine whether the current position of the robotic lawn mower 100 is the boundary position. If the magnetic signal detection module 20 detects the boundary 201, the control module 30 may control the robotic lawn mower 100 to perform actions such as turning or reversing, to control the robotic lawn mower 100 to move away from the boundary 201 or control the robotic lawn mower 100 to perform cutting along the boundary 201, thereby performing a trimming mode of cutting along the boundary. It may be understood that, the magnetic device 30 not only can be disposed at the position near the boundary at which a signal is unreliable, but also can be disposed at another position at which a signal is unreliable. For example, two working areas are separated by a space, and a satellite signal in the space is unreliable. In this case, the magnetic device is disposed in the space, to help guide the robotic lawn mower to move from an area to another area along the magnetic device. This embodiment is described below.

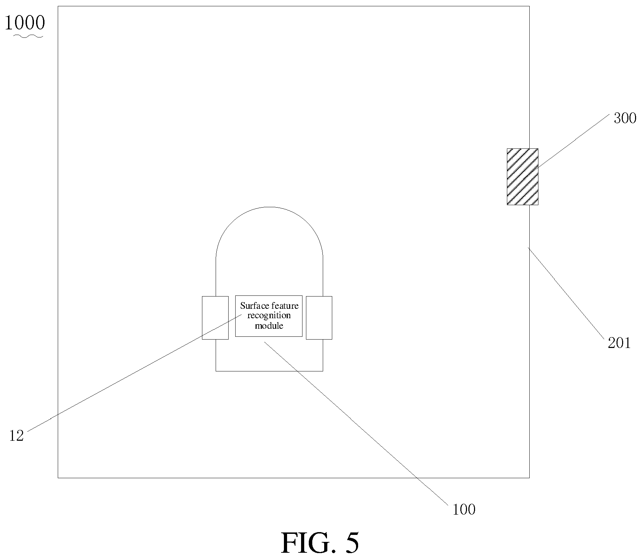

In the embodiment shown in FIG. 5, due to the mottled grassland at the boundary position of the working area 200, during working, the robotic lawn mower 100 cannot clearly distinguish the boundary 201 by the surface feature recognition module 12 such as a capacitive sensor, easily resulting in misjudgment on detection of the boundary 201. For example, the robotic lawn mower 100 is likely to travel outside the working area and cause danger. Therefore, the user may dispose the magnetic device 300 at the boundary position at which the surface feature of the working area and/or the surface feature of the non-working area are/is unreliable. That is, the user may dispose the magnetic device 300 at the boundary position at which the feature is not clear. The boundary position at which the feature is not clear is represented by oblique-line filling in FIG. 5. The surface feature recognition module 12 outputs the boundary recognition result to the control module. After the determining of the control module, for example, when the control module determines that the recognition result of the surface feature recognition module is inaccurate, the control module controls the magnetic signal detection module 20 to detect the magnetic device 300 to assist in detecting the boundary 201. Even if the detection result of the surface feature recognition module 12 is inaccurate, the boundary 201 defined by the magnetic device can be detected by using the magnetic signal detection module 20, to improve the accuracy of detecting the boundary. Certainly, as required, the surface feature recognition module 12 and the magnetic signal detection module 20 may perform detection simultaneously, and the boundary of the working area is analyzed by combining the detection results of the surface feature recognition module and the magnetic signal detection module.

Similarly, in the second embodiment of recognizing the boundary by using the surface feature recognition module, the magnetic device not only can be disposed at a position near the boundary, but also can be disposed at another position. Description is made below.

In the foregoing embodiments, a disposition position of the magnetic device 300 is generated based on the preset map. That is, the position at which the magnetic device may be disposed is displayed on the preset map. For example, when the position detection module, such as the GPS, detects the boundary and generates the preset map, the position at which the satellite signal is unreliable is displayed on the preset map, a prompt indicating that the magnetic device can be disposed is generated at the position at which the satellite signal is unreliable, and the user disposes the magnetic device at the indicated position as required. It may be understood that, when the preset map is obtained by the self-moving device from the outside, the preset map may also display a prompt for setting the disposition position of the magnetic device.

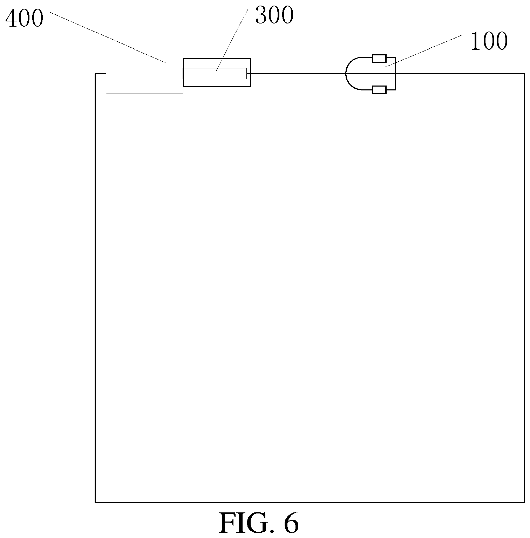

As shown in FIG. 6, the automatic working system in this embodiment of the present invention further includes a docking station 400 for a self-moving device to dock, so that the self-moving device 100 docks at the docking station 400 for standby or charging. If a satellite signal is unreliable due to bushes or the like in the vicinity of the docking station, a shaded area (represented by oblique-line filling in FIG. 6) is formed, and the self-moving device 100 cannot accurately detect a position thereof, resulting in a failure in returning to the docking station 400. The magnetic device 300 is disposed at the position of the docking station 400, and the magnetic device 300 is detected by using the magnetic signal detection device, to guide the self-moving device 100 to return to the docking station 400. Specifically, the magnetic device is disposed in a direction for indicating the self-moving device to dock with the docking station. That is, an extending direction of the magnetic device in a horizontal direction is parallel to a traveling direction of the self-moving device. A smaller distance to the docking station indicates a stronger magnetic field signal. When the self-moving device returns to the vicinity of the docking station by using a GPS technology, a vision technology, or the like, the magnetic signal detection module detects the magnetic signal of the magnetic device 300, and transmits the detected magnetic signal to the control module, and the control module determines a distance and/or a direction from the self-moving device to the docking station based on the strength and/or a direction of the magnetic field signal, and controls the self-moving device 100 to approach the docking station 400 along the magnetic device 300, to finally guide the self-moving device 100 to return to the docking station 400. The vicinity of docking station may specifically refer to an environment within a range of less than 1.5 meters with the docking station as a circle center.

Further, as shown in FIG. 6, the magnetic device 300 is disposed at an extended position of the docking station 400, and one end of the magnetic device 300 is connected to or very close to one end of the docking station 400. In a returning process of the self-moving device 100, the magnetic signal detection module detects the magnetic signal of the surrounding environment. When the magnetic signal detection module detects the magnetic signal generated by the magnetic device, the control module controls, based on the strength and/or a direction of the magnetic signal, the self-moving device 100 to move along the magnetic device 300, to guide the self-moving device 100 to return to the docking station 400. If necessary, a docking technology, such as a guide rail, at the docking station 400 is further used to guide the self-moving device 100 to accurately dock at a docking position at the docking station.

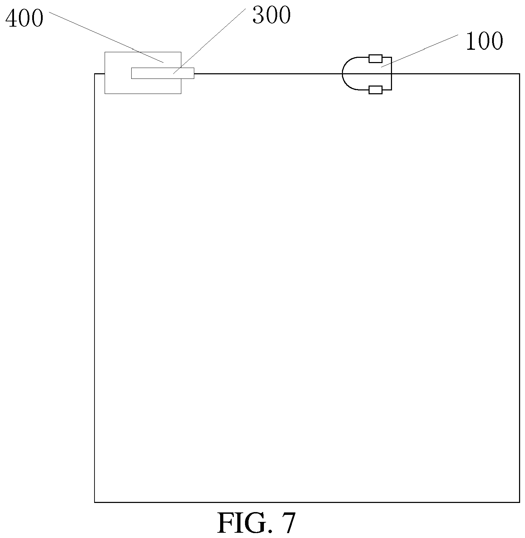

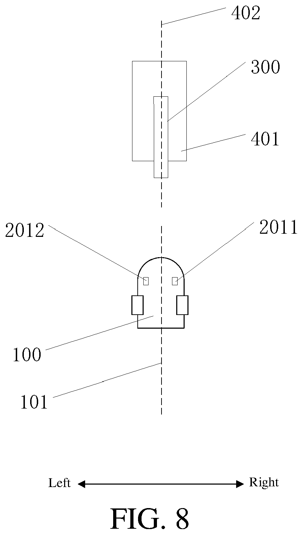

As shown in FIG. 7 and FIG. 8, at least a part of the magnetic device 300 may be further disposed at the docking station 400. Specifically, the magnetic device 400 may be disposed at a central axis 402 of a base 401 of the docking station. When the self-moving device 100 returns to the vicinity of the docking station 400, the magnetic signal detection module detects the magnetic signal of the magnetic device, and continually approaches the docking position of the docking station along the magnetic device 300 under the action of the magnetic device. Ideally, the central axis 101 of the self-moving device 100 continually approaches and finally coincides with the magnetic device 300, to accurately dock the self-moving device 100 with the docking station 400.

The foregoing solution of disposing the magnetic device at the docking station is also applicable to the second embodiment of recognizing the boundary of the working area by using the surface feature recognition module in the present invention. The magnetic device is used to assist in guiding the self-moving device to return to the docking station.

Referring to FIG. 8 again, in this embodiment, there are two geomagnetic detection modules, and the magnetic signal detection module 20 includes a first geomagnetic detection module 2011 and a second geomagnetic detection module 2012. The first geomagnetic detection module 2011 and the second geomagnetic detection module 2012 are mounted on two sides of a forward direction of the self-moving device 100 respectively. Specifically, the first geomagnetic detection module and the second geomagnetic detection module may be symmetrically disposed on the two sides of the forward direction of the self-moving device, and are respectively configured to detect a first magnetic signal and a second magnetic signal generated by the magnetic device 300. When the self-moving device 200 approaches the docking station 400, the first geomagnetic detection module 2011 and the second geomagnetic detection module 2012 detect the first magnetic signal and the second magnetic signal in real time and adjust a traveling direction of the machine in real time. When directions of the detected first magnetic signal and the detected second magnetic signal are adjusted to be opposite, it indicates that the two geomagnetic detection modules of the self-moving device 100 are located on two sides of the magnetic device. Specifically, assuming that the first geomagnetic detection sensing module 2011 is disposed at front right position in the traveling direction of the self-moving device, and the second geomagnetic detection module 2012 is disposed at a front left position in the traveling direction of the self-moving device, the control module 300 may control the self-moving device 100 to adjust the position to the left when the strength of the first magnetic field signal is greater than the strength of the second magnetic field signal. When the strength of the first magnetic field signal is less than the strength of the second magnetic field signal, the control module 300 may control the self-moving device 100 to adjust the position to the right. When the strength of the first magnetic field signal is equal to the strength of the second magnetic field signal, the control module 300 may control the self-moving device 100 to travel straight. When the self-moving device 100 reaches the docking position, for example, when the strength of the magnetic signal reaches a preset strength, the self-moving device is controlled to stop. It may be understood that, the self-moving device 100 travels relatively slowly and turns at a relatively small amplitude, to correct the action at any time. In this embodiment, the two symmetrical geomagnetic detection sensing modules are disposed on the self-moving device, so that the detection sensitivity is high, and a distance and a direction of the self-moving device relative to the docking station can be determined more conveniently and accurately, thereby achieving accurate returning and autonomous charging of the self-moving device.

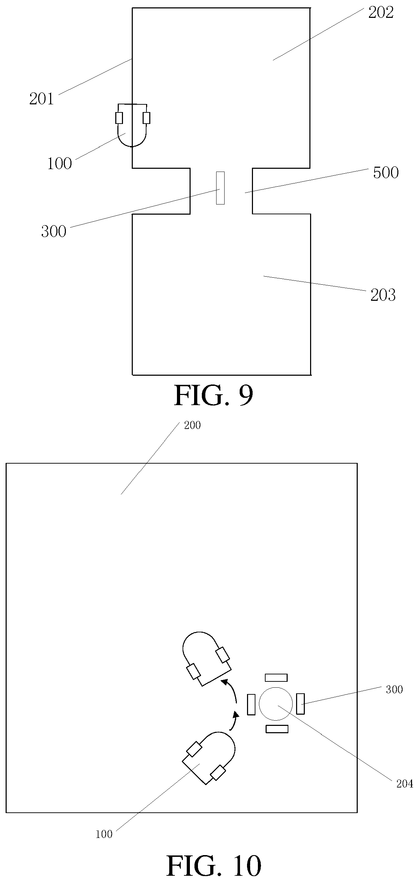

As shown in FIG. 9, the working area of the self-moving device is generally discontinuous. For example, a foreyard and a backyard of a user's home are separated, and are generally connected by using a channel. An example in which the foreyard is the first working area 202 and the backyard is the second working area 203 is used. The first working area 202 and the first working area 203 are separated by a space 500. When the self-moving device needs to enter the first working area 203 to execute a task after completing a work task in the first working area 202, or the self-moving device needs to return to the docking station in the first working area 203 for charging due to insufficient power when working in the first working area 202, the self-moving device 100 needs to enter the first working area 203 from the first working area 202. In this case, to help guide the self-moving device 100 to enter the first working area 203 from the first working area 202, the magnetic device 300 may be disposed in the space 500, and in particular, disposed at the position near the boundary of the first working area, and a disposition direction of the magnetic device 300 indicates a direction in which the space 500 is passable for entering the first working area 203 from the first working area 202. When the self-moving device 100 needs to pass through the space 500, the self-moving device 100 may travel along the boundary of the first working area 202, to detect the magnetic device 300 within the space 500. When the magnetic signal of the magnetic device 300 is detected, the control module 30 controls, based on the strength and/or the direction of the magnetic signal, the self-moving device 100 to move along the magnetic device 300, to pass through the space 500 to enter the first working area 203 from the first working area 202. The self-moving device detects the magnetic device in a route of moving along the boundary of the first working area, so that the self-moving device can detect the magnetic device regularly and quickly, to avoid the self-moving device in the working area from traveling and performing detection blindly, thereby affecting the efficiency of detecting the magnetic device.

In the foregoing embodiments, the magnetic device is preferably disposed at a position where the signal is unreliable within the space. For example, when the position of the self-moving device is detected by using the position detection module such as a GPS module, if the quality of the satellite signal within the space is unreliable due to bushes or the like within the space, the self-moving device cannot obtain the position of the self-moving device based on the satellite signal, that is, cannot pass through the space. In this case, the magnetic device is disposed in the space. When detecting the magnetic device, the self-moving device travels along the magnetic device, to accurately guide the self-moving device to pass through the space. It may be understood that, this embodiment is also applicable to a case in which the boundary is recognized by using the surface feature recognition module. For example, the space connecting the first working area and the second working area is generally a channel, and the channel is generally a weed-free road surface such as a stone road laid for the user to conveniently walk. The surface feature recognition module of the robotic lawn mower recognizes that the channel is a non-working area. In this case, the robotic lawn mower is away from the channel, that is, cannot pass through the channel. In this case, the magnetic device implementing a guiding function is disposed in the channel. When the robotic lawn mower needs to enter the second working area from the first working area, the magnetic device is detected by using the magnetic signal detection module, and the robotic lawn mower moves along the magnetic device, and finally passes through the space to enter the second working area.

In a specific embodiment, the magnetic device may be further disposed in an excluded area within the working area, to prohibit the self-moving device from entering the excluded area. As shown in FIG. 10, the lawn 200 of the user includes a flower bed 204. The lawn 200 is a working area in which the robotic lawn mower needs to execute a task, while the flower bed 204 is an excluded area of an area in which the robotic lawn mower does not need to execute a cutting task. The excluded area is defined as an area in which the self-moving device is prohibited from executing a work task within the working area. In this case, the user may dispose the magnetic device around the excluded area, that is, the flower bed 204, where the magnetic device functions as a separating wall. When performing the cutting task within the lawn, the robotic lawn mower further simultaneously detects the magnetic device by using the magnetic detection device, and the control module determines a distance between the robotic lawn mower and the flower bed 204 and/or a direction according to the strength and/or the direction of the detected magnetic signal. When the robotic lawn mower approaches the flower bed 204, the control module controls the robotic lawn mower to reverse or turn to move away from the flower bed 204, to prevent the robotic lawn mower from entering the flower bed 204 to cut and cause damage to the flower bed 204, or to control the robotic lawn mower to travel and cut along a boundary of the flower bed, to cut weeds around the flower bed 204 cleanly.

It may be understood that, the control module of the self-moving device in the embodiments of the present invention determines reliability of the recognition result of the boundary recognition module. For example, when the boundary recognition module is the GPS module, the control module analyzes the reliability of receiving the satellite signal by the GPS module. When the reliability falls within a preset range, the control module determines that the reliability of the satellite signal is high at the moment, and in this case, the control module uses the boundary result detected by the GPS module as the result of the boundary recognition. Correspondingly, in this case, the control module does not use the boundary result detected by the magnetic signal detection module. However, when the control module analyzes that the reliability of the satellite signal received by the GPS module exceeds the preset range, it indicates that the reliability of the satellite signal is poor, and an error of the boundary recognized by the GPS module is large. In this case, the control module controls the movement pattern of the self-moving device by taking the boundary result detected by the magnetic signal detection module as a standard and ignoring the detection result of the GPS module. Such a setting is to prevent that when the satellite signal is unreliable, the detection result of the GPS module is unreliable, and the self-moving device takes the unreliable detection result as a standard, resulting in misjudgment, impact on the working efficiency, and possible damage to the self-moving device or the working area.

In another embodiment, if the reliability of the recognition result of the boundary recognition module is not set for the self-moving device, the following solution may be further used. That is, if the detection result of the magnetic signal detection module is different from the recognition result of the boundary recognition module, the control module controls the movement pattern of the self-moving device based on the detection result of the magnetic signal detection module. For example, when the GPS module detects that a specific position is a non-boundary area, and the magnetic signal detection module detects a magnetic signal at the position and determines that the position is a boundary, the control module determines that the position is the boundary by taking the detection result of the magnetic signal detection module as a standard, and controls the self-moving device to move.

The embodiments of the present invention further provide a working method of an automatic working system. The automatic working system includes: a self-moving device, configured to move and execute a work task within a working area defined by a boundary as described in the foregoing embodiments, and a magnetic device, disposed within the working area or at a position near the boundary of the working area, where the self-moving device includes a boundary recognition module, a magnetic signal detection module, and a control module; and the method includes the following steps:
Step S 1. Recognize the boundary of the working area.
Step S2. Detect the magnetic device to further recognize the boundary of the working area and/or guide the self-moving device.
Step S3. Control a movement pattern of the self-moving device based on a recognition result of the boundary recognition module and/or a detection result of the magnetic signal detection module.

The embodiments of the present invention further provide a self-moving device. The self-moving device includes a boundary recognition module, a magnetic signal detection module, and a control module. The boundary recognition module is configured to recognize the boundary of the working area. The control module is configured to control the self-moving device to move and execute a work task within a working area limited by a boundary. The magnetic signal detection module is configured to detect a magnetic signal to further recognize the boundary of the working area and/or guide the self-moving device. The control module is configured to control a movement pattern of the self-moving device based on a recognition result of the boundary recognition module and/or a detection result of the magnetic signal detection module. It may be understood that, the magnetic signal is generated by a magnetic device disposed within the working area or at a position near the boundary of the working area.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of the present disclosure, and their description is specific and detailed, but cannot therefore be understood as a limitation to the patent scope of the present invention. It should be noted that, a person of ordinary skill in the art may further make some variations and improvements without departing from the concept of the present invention, and the variations and improvements belong to the protection scope of the present invention. Therefore, the protection scope of the patent of the present invention shall be topic to the claims.

## Claims

1. An automatic working system, comprising:
a self-moving device, configured to move and execute a work task within a working area defined by a boundary; and
a magnetic device, disposed within the working area or at a position near the boundary of the working area, wherein
the self-moving device comprises a boundary recognition module, a magnetic signal detection module, and a control module;
the boundary recognition module is configured to recognize the boundary of the working area;
the magnetic signal detection module is configured to detect a magnetic signal generated by the magnetic device to further recognize the boundary of the working area and/or guide the self-moving device; and
the control module is configured to control a movement pattern of the self-moving device based on a recognition result of the boundary recognition module and/or a detection result of the magnetic signal detection module.

2. The automatic working system according to claim 1, wherein the magnetic device comprises a strip-shaped magnetic device.

3. The automatic working system according to claim 1, wherein the boundary recognition module comprises a position detection module, and the position detection module recognizes the boundary of the working area based on a comparison between a detected current position of the self-moving device and a preset map.

4. The automatic working system according to claim 3, wherein the position detection module comprises a satellite signal obtaining unit, wherein the satellite signal obtaining unit detects the current position of the self-moving device based on an obtained satellite signal.

5. The automatic working system according to claim 3, wherein the magnetic device is disposed at a position near a boundary at which a signal of the position detection module is unreliable, the magnetic signal detection module detects the magnetic signal to recognize the boundary of the working area, and the control module controls, based on the detection result of the magnetic signal detection module, the self-moving device to move away from the boundary or along the boundary.

6. The automatic working system according to claim 3, wherein a disposition position of the magnetic device is generated based on the preset map.

7. The automatic working system according to claim 3, wherein the preset map is generated by the position detection module or is obtained by the self-moving device from the outside.

8. The automatic working system according to claim 1, wherein the boundary recognition module comprises a surface feature recognition module, wherein the surface feature recognition module recognizes the boundary of the working area based on a difference between a surface feature of the working area and a surface feature of a non-working area.

9. The automatic working system according to claim 8, wherein the surface feature recognition module comprises one or more of an image obtaining module, a capacitance detection module, a millimeter wave radar detection module, a multispectral detection module, and an infrared laser image detection module.

10. The automatic working system according to claim 8, wherein the magnetic device is disposed at a position near a boundary at which the surface feature of the working area and/or the surface feature of the non-working area are/is unreliable, the magnetic signal detection module detects the magnetic signal to recognize the boundary of the working area, and the control module controls, based on the detection result of the magnetic signal detection module, the self-moving device to move away from the boundary or along the boundary.

11. The automatic working system according to claim 1, wherein the automatic working system further comprises a docking station for the self-moving device to dock, the magnetic device is disposed at the docking station, and is disposed along a direction in which the self-moving device docks with the docking station, and the control module controls, based on the magnetic signal detected by the magnetic signal detection module, the self-moving device to move along the magnetic device, to guide the self-moving device to move to the docking station.

12. The automatic working system according to claim 11, wherein the magnetic device is disposed at an extended position of the docking station, and the control module controls the self-moving device to move along the magnetic device to guide the self-moving device to return to the docking station.

13. The automatic working system according to claim 11, wherein the magnetic device is disposed at the docking station, and the control module controls the self-moving device to move along the magnetic device to guide the self-moving device to dock with the docking station.

14. The automatic working system according to claim 13, wherein the docking station further comprises a base, and the magnetic device is disposed on a central axis of the base.

15. The automatic working system according to claim 1, wherein the working area comprises a first working area and a second working area separated by at least one space, the magnetic device is disposed within the space, and configured to indicate a direction in which the space is passable for entering the second working area from the first working area, and the control module controls, based on the magnetic signal detected by the magnetic signal detection module, the self-moving device to move along the magnetic device, to guide the self-moving device to pass through the space for entering the second working area from the first working area.

16. The automatic working system according to claim 15, wherein the self-moving device moves along a boundary of the first working area to detect the magnetic device.

17. The automatic working system according to claim 1, wherein the magnetic device is disposed around an excluded area within the working area, and the control module controls the movement pattern of the self-moving device based on the magnetic signal detected by a magnetic detection device, to move away from the excluded area or around the excluded area, wherein the excluded area comprises an area in which the self-moving device is prohibited from executing the work task within the working area.

18. The automatic working system according to claim 1, wherein the magnetic signal detection module comprises a geomagnetic detection module.

19. The automatic working system according to claim 18, wherein the geomagnetic detection module comprises a first geomagnetic detection module and a second geomagnetic detection module, and the first geomagnetic detection module and the second geomagnetic detection module are mounted on two sides of a forward direction of the self-moving device respectively.

20. The automatic working system according to claim 1, wherein the control module controls the movement pattern of the self-moving device based on the strength and/or a direction of the magnetic signal detected by the magnetic signal detection module.

21. The automatic working system according to claim 1, wherein the control module determines reliability of the boundary recognition module, when the reliability falls within a preset range, the control module controls the movement pattern of the self-moving device based on the recognition result of the boundary recognition module, and when the reliability exceeds the preset range, the control module controls the movement pattern of the self-moving device based on the detection result of the magnetic signal detection module.

22. A working method of an automatic working system, wherein the automatic working system comprises: a self-moving device, configured to move and execute a work task within a working area defined by a boundary, and a magnetic device, disposed within the working area or at a position near the boundary of the working area, wherein the self-moving device comprises a boundary recognition module, a magnetic signal detection module, and a control module; and the method comprises:
recognizing the boundary of the working area;
detecting the magnetic device to further recognize the boundary of the working area and/or guide the self-moving device; and
controlling a movement pattern of the self-moving device based on a recognition result of the boundary recognition module and/or a detection result of the magnetic signal detection module.

23. A self-moving device, comprising: a boundary recognition module, a magnetic signal detection module, and a control module, wherein
the boundary recognition module is configured to recognize the boundary of the working area, and the control module is configured to control the self-moving device to move and execute a work task within a working area limited by a boundary; and
the magnetic signal detection module is configured to detect a magnetic signal to further recognize the boundary of the working area and/or guide the self-moving device; and
the control module is configured to control a movement pattern of the self-moving device based on a recognition result of the boundary recognition module and/or a detection result of the magnetic signal detection module.

24. The self-moving device according to claim 23, wherein the magnetic signal is generated by a magnetic device disposed within the working area or at a position near the boundary of the working area.
